# FASCICULE DE BREVET EUROPEEN

(11) **EP 0 520 579 B1**
(45) Date de publication et mention de la délivrance du brevet: **02.06.1999**
(21) Numéro de dépôt: 92201877.5
(22) Date de dépôt: 25.06.1992
(51) Int. Cl.: G06F 9/44, G06F 9/32

(54) **Dispositif de traitement de l'information plus particulièrement adapté à un langage chaîné, du type FORTH notamment**
Datenverarbeitungsanordnung, besonders an FORTH-artige Programmiersprachen angepasst
Data processing apparatus particularly adapted for threaded languages, notably FORTH

(30) Priorité: 28.06.1991 FR 9108062
(43) Date de publication de la demande: 30.12.1992
(73) Titulaire: LABORATOIRES D'ELECTRONIQUE PHILIPS S.A.S., 94450 Limeil-Brévannes (FR); Koninklijke Philips Electronics N.V., 5621 BA Eindhoven (NL)
(72) Inventeur: Duranton, Marc, Société Civile S.P.I.D., F-75008 Paris (FR)
(74) Mandataire: Chaffraix, Jean

(56) Documents cités:
- EP-A- 0 185 215
- INSPEC Database Institute of Electrical Engineers, LONDON, GB J. R. HAYES et al; "A 32 Bit Forth Microprocessor"; Accession No. 3190100
- ELECTRONIC DESIGN vol. 35, no. 12, 14 Mai 1987, HASBROUCK HEIGHTS, NJ, US pages 93 - 100 T. JONES ET AL 'Standard-cell CPU toolkit crafts potent processors'

## Description

La présente invention concerne un dispositif de traitement d'informations plus particulièrement adapté à un langage informatique chaîné du type FORTH notamment, dispositif comportant entre autres :
- une mémoire principale pour contenir un programme d'exécution avec ses données d'instruction constituées par une pluralité d'instructions directement ou non directement exécutables qui sont regroupées en au moins un sous-programme,
- une première mémoire de type pile pour contenir l'adresse suivant l'adresse d'appel à un sous-programme (adresse de retour),
- une ou plusieurs unités d'opération pour exécuter les instructions directement exécutables, pouvant contenir chacune :
   . une deuxième mémoire de type pile pour contenir des paramètres utilisés par ledit programme,
   . un organe de décodage d'instructions pour décoder chaque donnée d'instruction issue de la mémoire principale.

Un tel dispositif est décrit dans le document de brevet européen publié sous le numéro 0 185 215.

Pour concevoir un programme d'exécution, le programmeur, ou le compilateur de langage, doit connaître les ressources matérielles avec lesquelles le dispositif fonctionne. Ainsi il doit savoir si chaque instruction est une instruction directement exécutable ou si l'on doit se brancher à un sous-programme effectuant la fonction à l'aide d'instructions directement exécutables. Par exemple si un organe de multiplication est prévu dans l'environnement du dispositif, l'opération de multiplication est directement exécutable et si cet organe est absent on doit se brancher à un sous-programme de multiplication qui va l'effectuer par additions et décalages successifs. Ce choix est fixé au moyen d'un élément binaire incorporé à l'instruction que le programmeur positionne pour indiquer que l'instruction est directement ou non directement exécutable. En d'autres termes, on doit compiler avec un indicateur pour fournir soit des instructions directement exécutables, soit un appel à une bibliothèque émulant l'instruction absente.

Le fait que l'utilisateur doit connaître les ressources constitue un premier inconvénient.

Un deuxième inconvénient qui en découle est que le programme établi ne peut fonctionner que sur le dispositif avec l'environnement pour lequel le programme a été conçu - l'ajout d'autres ressources matérielles impose une ré-écriture ou une recompilation du programme.

L'invention propose un dispositif du genre mentionné dans le préambule qui évite, dans une large mesure, les inconvénients précités.

Pour cela, un tel dispositif est remarquable en ce qu'il est muni de moyens pour considérer comme des adresses de sous-programme les instructions qu'il ne peut pas exécuter directement.

Ainsi l'idée de l'invention est de considérer que toute donnée d'instruction est une adresse de procédure. Il n'y a donc plus d'instructions au sens propre du terme.

La description suivante accompagnée des dessins annexés, le tout donné à titre d'exemple non limitatif fera bien comprendre comment l'invention peut être réalisée.

La figure 1 montre le schéma d'un premier dispositif de traitement de l'information conforme à l'invention.

La figure 2 montre l'implantation de données d'instructions dans la mémoire principale.

La figure 3 montre plus en détail l'unité de décodage.

La figure 4 montre le schéma d'un autre mode de réalisation d'un dispositif de traitement de l'information, incluant des moyens pour l'exécution de boucles de programme.

La figure 5 montre plus en détail l'unité de décodage convenant pour le dispositif de l'invention montré à la figure 4.

La figure 6 montre l'implantation en mémoire pour l'exécution d'une boucle de programme.

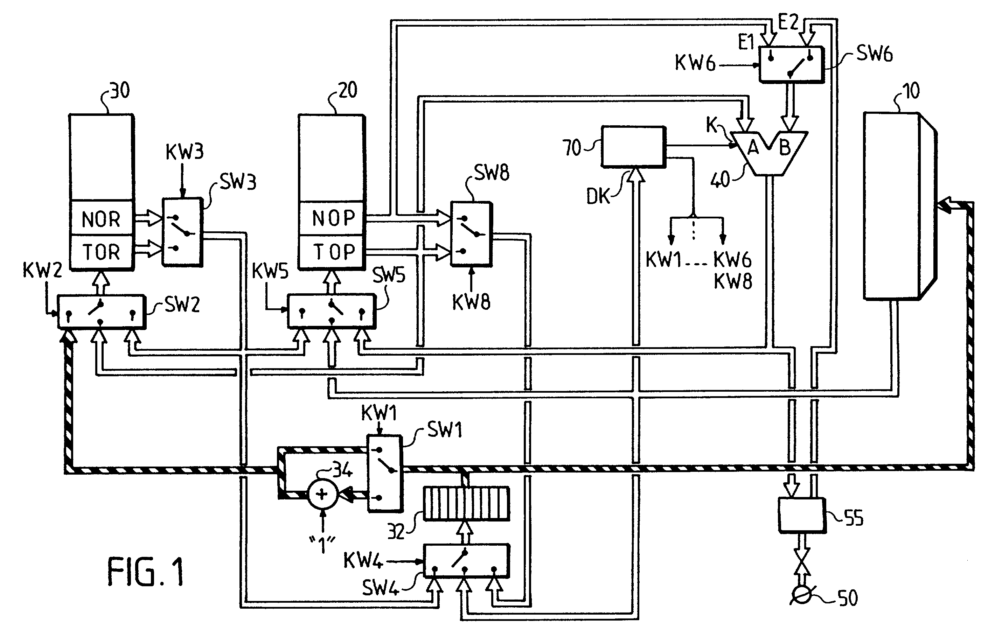

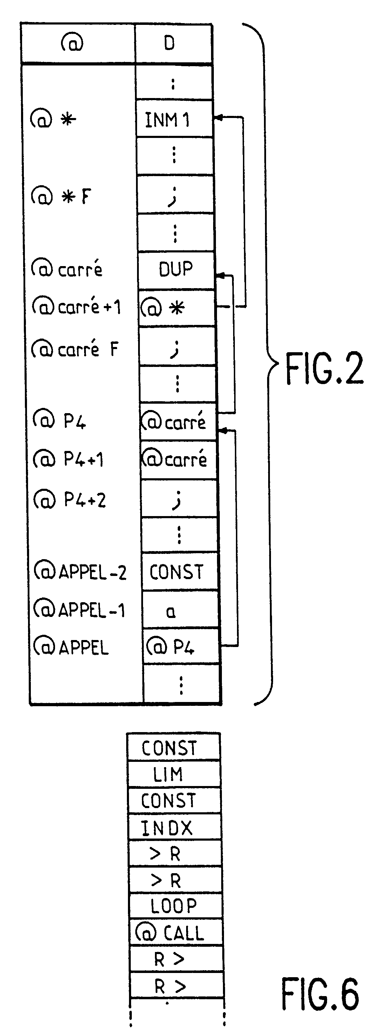

Le dispositif de traitement d'informations montré à la figure 1 se compose tout d'abord d'une mémoire principale 10 contenant les données d'instructions. A la figure 2 on a représenté, à titre d'exemple, une série de telles données montrant un programme P4 calculant la puissance quatrième d'un nombre "a", c'est-à-dire calculant a⁴. A la figure 2, la rubrique @ indique l'adresse et D la donnée présente à cette adresse. Ainsi le programme P4 est appelé à l'adresse @APPEL et implique d'autres sous-programmes qui seront explicités en détail dans la suite du présent exposé. Cette structure d'instructions est propre aux langages dit "chaînés". Les instructions dont il a été question, ainsi que *, DUP sont conformes aux notations du langage Forth.

Le dispositif de la figure 1 comporte en outre une première mémoire 20 de type pile (dernière donnée entrée, première donnée sortie) prévue pour contenir des paramètres et, dans l'exemple décrit, on trouvera notamment le nombre a ; une deuxième mémoire 30 aussi de type pile, est prévue pour contenir les adresses de sous-programmes et coopère avec un registre d'adresses de données d'instructions portant la référence 32. Par l'intermédiaire d'un commutateur SW1 le contenu du registre 32 peut être augmenté d'une unité au moyen d'un additionneur 34 ou pas, avant d'être transmis vers un autre commutateur SW2 dont la sortie est en relation avec l'entrée de la mémoire 30. La dernière information entrée est mise à la position repérée par TOR tandis que l'avant dernière est repérée par NOR. Un commutateur SW3 sélectionne la donnée contenue dans la position NOR ou TOR avant de l'acheminer vers le registre 32 par l'intermédiaire d'un autre commutateur SW4.

D'une manière similaire, on a repéré respectivement par TOP et NOP la la dernière et l'avant dernière positions auxquelles les paramètres sont emmagasinés dans la mémoire 20. Un commutateur à trois positions SW5 permet de sélectionner les données à empiler dans la mémoire 20. Ces données proviennent soit de la mémoire 10, soit d'une unité d'opération 40, et soit de la sortie du commutateur SW3. Cette unité 40 est munie de deux entrées d'opérande A et B. L'entrée A est reliée à la position TOP de la mémoire 20 tandis que l'entrée B est reliée à la sortie d'un commutateur SW6 à deux entrées E1 et E2. L'entrée E1 est reliée à la position NOP de la mémoire 20 et l'entrée E2 est reliée à l'accès extérieur 50 par l'intermédiaire d'une unité d'entrée-sortie 55. Cette unité fournit aussi des informations de sortie, provenant de l'unité d'opération 40, à l'accès 50. Le commutateur SW2 permet de sélectionner, outre la donnée provenant du registre 32, des données provenant de la sortie du commutateur SW3 et celles contenues à la position TOP de la mémoire 20. Un commutateur SW4 permet de charger le registre 32 de données provenant soit de la mémoire 10, soit des données présentes à la sortie du commutateur SW3 et d'un autre commutateur SW8 qui présélectionne les données contenues aux positions NOP et TOP de la mémoire 20.

Les différents commutateurs SW1 à SW6 et SW8 sont munis respectivement de commandes de positions KW1 à KW6 et KW8.

L'unité d'opération 40 est munie d'une entrée de commande K qui reçoit les informations de commande d'une unité de décodage d'instruction 70 dont l'entrée DK est branchée à la sortie de la mémoire 10 et fournit les différents signaux KW1 à KW6, KW8 en fonction des instructions à effectuer.

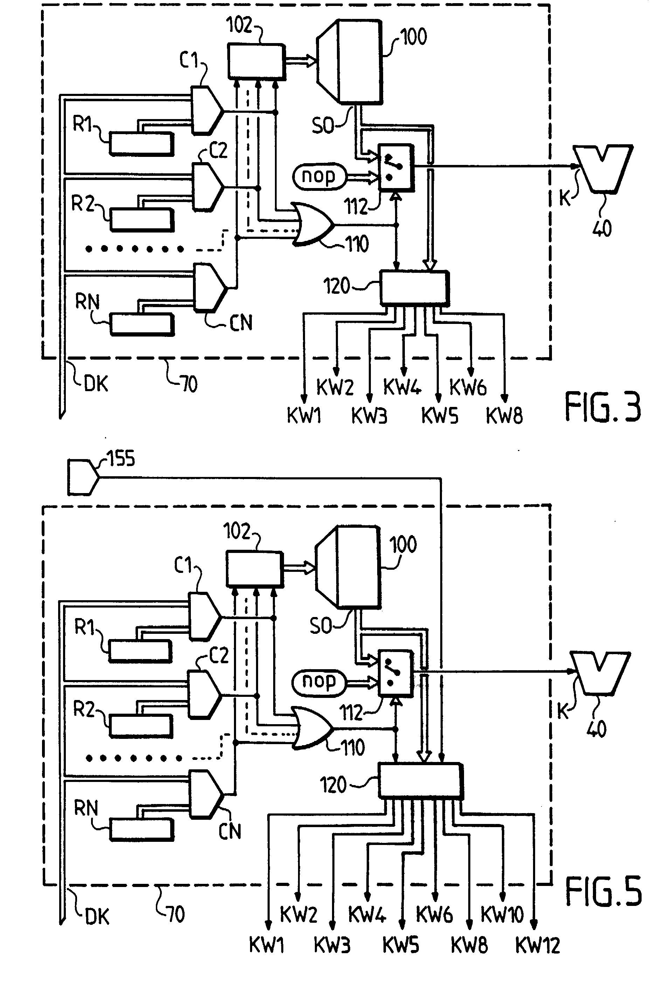

Selon l'invention l'unité de décodage d'instructions est réalisée d'une manière avantageuse à partir d'une mémoire associative dont un schéma de principe est représenté à la figure 3.

Cette mémoire associative est constituée à partir d'un bloc de mémoire 100 muni d'une sortie SO peut fournir un code, afin que les opérations à effectuer par l'unité 40 puissent se dérouler. Cependant, le code d'entrée relié à l'accès DK est comparé avec tous les codes d'exécution qui peuvent être exécutés directement par l'unité 40. Tous ces codes d'exécution sont contenus dans des registres R1 à RN et des comparateurs C1 à CN effectuent la comparaison avec le contenu de ces registres et le code d'entrée présent à l'entrée DK. Un décodeur 102 utilise les résultats de ces comparaisons pour générer l'adresse de la mémoire 100, afin que celle-ci délivre à l'unité 40 l'instruction correspondante. Une porte OU référencée 110, par exemple, recueille le résultat de ces comparaisons. Si le code d'entrée est reconnu, la sortie du bloc mémoire est reconnue et son code (ou ses codes) de sortie est (sont) validé(s) et sort (sortent) du bloc 100 à l'entrée K de l'unité 40. Si le code d'entrée n'est pas reconnu, un code non opératoire (nop) est appliqué alors à la commande K, l'adresse de non décodage génère le nop. Les différentes informations issues de la porte 110 et de la sortie SO de la mémoire 100 sont appliquées à une unité de commande de commutation 120 qui fournit les signaux KW1 à KW6 et KW8.

Le décodage d'instructions peut être réalisé par toute autre méthode de décodage, programmable ou non. L'ensemble R1, ..., RN, C1, ..., CN peut être réalisé par toute structure de mémoire associative. Pour l'invention, la méthode de décodage sera avantageusement programmable.

En effet, pour toute modification du matériel, il suffit de ne modifier que le contenu de la mémoire associative. Un programme se compose donc : d'une liste d'"instructions", indépendante du processeur utilisé (dans la limite où celui-ci a des instructions élémentaires communes), et d'une table, chargée dans la "mémoire associative" qui reflète les caractéristiques propres de la machine. Cela est avantageux lors de la vente de programmes clé en main. La modification du matériel n'entraîne pas une recompilation de l'application, mais uniquement la modification du contenu de la mémoire associative (quelques octets).

On explique maintenant le fonctionnement du dispositif de l'invention dans le cadre du programme exemple montré à la figure 2, c'est-à-dire la mise à la puissance 4 d'un nombre "a", soit évaluer a⁴.

Tout d'abord on expose le fonctionnement de base du dispositif de l'invention. Par défaut, le dispositif considère que toute donnée en sortie de (10) est une adresse d'appel de sous-programme. Les opérations de base se déroulent comme suit : dans les opérations explicitées ci-dessous, (32) indique le contenu du registre 32, [@(32)]₁₀ indique le contenu de la mémoire 10 à l'adresse indiquée par le contenu du registre 32.
. (32) + 1 → TOR : on empile l'adresse suivante
. [@(32)]₁₀ : est analysé par 70 pour déterminer si c'est une instruction ou un appel de sous-programme.
Si c'est un appel de sous-programme (pas reconnu par la mémoire associative comme une instruction exécutable par le matériel) ;
[@(32)]₁₀ → 32 et le cycle recommence
Si c'est une instruction, elle peut avoir deux formes : retour ou non retour.
- forme non retour : on exécute les opérations en séquence
   . [@(32)]₁₀ est exécuté par l'unité 40
   . TOR → 32 le registre 32 est chargé avec l'adresse de l'instruction suivante (on dépile une seule donnée).
- forme retour : dans ce cas, on effectue en même temps que l'opération codée, un retour de sous-programme.
   . [@(32)]₁₀ est exécuté par 40
   . NOR → 32 : dépilage de deux données dans la mémoire 30.

On retourne à l'adresse d'appel du sous-programme.

On va voir ce mécanisme dans le cadre du programme exemple.

D'autres informations peuvent être trouvées dans l'Annexe I du présent mémoire.

On admet qu'au départ, le contenu du registre 32 est APPEL-2, qui est un code d'adresse noté @APPEL-2 pour une donnée d'instruction contenue dans la mémoire 10. A cette adresse un symbole, par exemple CONST, signifie que la donnée suivante est une constante et qu'elle doit être stockée à la position TOP au sein de la mémoire 20.

Les étapes de fonctionnement sont expliquées ci-dessous par des commentaires relatifs à des pas de programme explicités plus en détail à l'Annexe II.

| Pas du Progr. | Commentaires |
|---|---|
| 1 - | La valeur @APPEL-2 incrémentée d'une unité est transférée à la position TOR de la mémoire 30. On effectue alors un empilage à la position TOR, on a le code [APPEL-1]. |
| 2 - | Le contenu de la mémoire 10 à l'adresse @APPEL-2 est analysé comme le préalable d'une constante. |
| 3 - | La valeur @APPEL-1 pointe maintenant la valeur "a" contenue dans la mémoire 10. On effectue alors un dépilage. |
| 4 - | La valeur @APPEL-1 incrémentée d'une unité est transférée à la position TOR de la mémoire 30 (empilage). |
| 5 - | La constante "a" est mise à la position TOP de la mémoire 20 (le préalable du pas 2 a commuté les commutateurs SW3). |
| 6 - | Le contenu du registre 32 est @APPEL ce qui correspond à l'exécution de la puissance quatrième de "a", le code contenu correspond à une adresse de sous-programme @P4 (primitive continue). |
| 7 - | L'adresse @APPEL, incrémentée d'une unité est mise à la position TOR. |
| 8 - | Le contenu de la mémoire 10 à l'adresse @APPEL est analysé ; comme ce code n'est pas reconnu comme étant directement exécutable, il est considéré comme étant une adresse. |
| 9 - | L'adresse @P4 est mise dans le registre 32. |
| 10 - | L'adresse @P4 incrémentée d'une unité est empilée. |
| 11 - | Le contenu de la mémoire 10 à l'adresse @P4 est analysé comme une adresse. |
| 12 - | L'adresse @carré est mise dans le registre 32. |
| 13 - | L'adresse @carré, incrémentée d'une unité, est empilée. |
| 14 - | L'instruction DUP est analysée, c'est une primitive. Cette instruction est donc exécutée. |
| 15 - | On passe à l'instruction suivante. |
| 16 - | On empile dans la mémoire 10 l'adresse du retour. |
| 17 - | L'examen de l'instruction implique un sous-programme. |
| 18 - | L'adresse de ce sous-programme est mise dans le registre 32 de sorte qu'à la sortie de la mémoire 10 on a la première instruction INM1 de multiplication. L'exécution de la multiplication est effectuée au moyen d'additions et de décodages successifs selon les manières bien connues de l'homme de l'art. |
| 19 - | Puis, on arrive à l'instruction de la forme de retour. |
| 20 - | Cette forme est emmagasinée. |
| 21 - | Après 2 dépilages on a effectué le retour du sous-programme. |
| 22 - | L'instruction du retour IR est rendue disponible. |
| 23 - | Elle est examinée. |
| 24 - | - - |
| 25 - | - - |
| 26 - | On fait appel au sous-programme de "carré" qui |
| 27 - | commence par l'instruction DUP. Le programme se poursuit ensuite comme depuis le pas 13 et suivants jusqu'à l'appel d'un nouveau carré. |
| 28 - | On retrouve donc le retour de sous-programme. |
| 29 - | Examen de l'instruction, retour de sous-programme. |
| 30 - | On dépile de deux éléments. |
| 31 - | Puis on obtient l'instruction de retour |
| 32 - | et on procède à son examen |
| 33 - | Suite du programme. |

Le programme finit de se dérouler.

Il est à noter que chaque instruction se compose des cycles suivants :
. (32) + 1 → TOR qui est un cycle d'empilage du contenu du registre 31 augmenté d'une unité.
. [@(32)]₁₀ qui est l'examen et l'analyse de l'instruction.
. Puis le branchement et le chargement d'une nouvelle valeur dans le registre 32.
Pour cela, on distingue trois cas :
a) [@(32)]₁₀ définit un appel de sous-programme
b) (TOR) → 32 implique l'exécution en séquence de l'instruction suivante avec un dépilage.
c) (NOR) → 32 relatif au retour de sous-programme avec un dépilage de deux éléments de la mémoire de retour 30.

D'autres opérations peuvent être effectuées par le dispositif de l'invention montré à la figure 1. Ceci est montré à l'Annexe I.

On a expliqué ici le fonctionnement d'un dispositif comportant des moyens pour exécuter un minimum d'instructions. Il convient alors de bien remarquer que le programme présenté ici, avec les mêmes instructions, peut être exécuté avec un dispositif conforme à l'invention et comportant des moyens supplémentaires ; par exemple, l'unité d'opération 40 peut comporter des moyens lui permettant d'exécuter des multiplications.

Le programme sera alors exécuté de la manière suivante :
- 1 à 16 -: identiques
- 17 - [@(32)]₁₀: est analysé alors comme une instruction directement exécutable, le symbole "*" n'est pas considéré comme une adresse, l'opération est exécutée.

Le code de l'application reste inchangé, il n'y a que le contenu du décodeur d'instructions 70 qui est modifié lorsqu'on ajoute une ressource matérielle au dispositif (dans ce cas un organe de multiplication câblé).

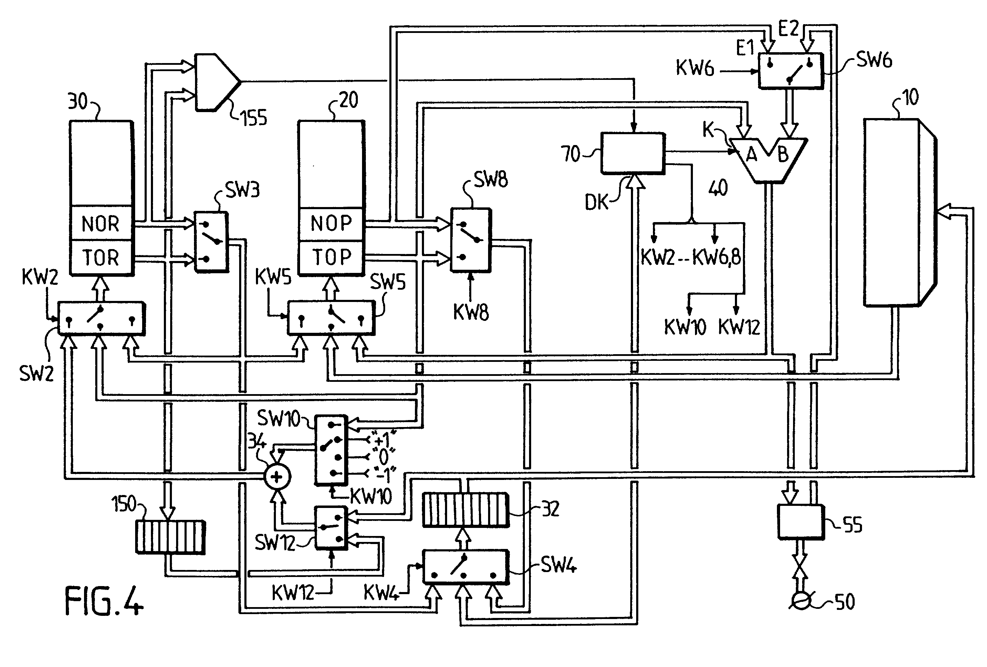

A la figure 4, on a représenté une autre variante de réalisation d'un autre dispositif conforme à l'invention. Sur cette figure, les éléments communs à ceux de la figure 1 portent les mêmes références. Ce dispositif de la figure 4 est muni de moyens qui lui permettent d'effectuer des boucles de programmes.

Ce dispositif de la figure 4 se distingue de celui de la figure 1, tout d'abord par le fait que les entrées de l'additionneur 34 sont reliées aux sorties de deux commutateurs SW10 et SW12. Le commutateur SW10 est muni de quatre entrées qui reçoivent les signaux représentant les nombres + 1, 0, - 1 et le contenu de la mémoire 20 défini par la position TOP respectivement. Le commutateur SW12 est muni de deux entrées. La première est reliée à la sortie du registre 32 et la deuxième, à la sortie d'un registre d'index 150 dont l'entrée est en relation avec la position TOR de la mémoire-pile 30.

Le dispositif de la figure 4 se distingue de celui de la figure 1, en outre, par le fait qu'il est prévu un comparateur de codes 155. Ses entrées sont mises en relation avec les positions NOR et TOR de la mémoire 30 et sa sortie à l'entrée de l'unité de décodage d'instructions 70. Cette unité fournira les signaux de commande KW10 et KW12 en direction des commutateurs SW10 et SW12 respectivement.

L'unité 70 de la figure 4 est montrée plus en détail à la figure 5. Le signal issu du comparateur 155 est appliqué à l'unité de commande de commutation 120.

L'index de boucle est en TOR, la limite de boucle en NOR (chargé par 2 instructions >R), on a donc une implantation mémoire telle que montrée à la figure 6, dans laquelle LIM est la limite de bouclage et INDX l'initialisation du registre 150, LIM et INDX étant annoncés par CONST.

Une boucle de programme s'effectue alors de la manière suivante, lorsqu'on a la limite de boucle en NOR, l'index de boucle en TOR :
- (32)+1 → TOR :: Empilage de (32)+1 adresse de branchement
- [@(32)]₁₀ :: L'instruction "boucle" est détectée
- (TOR) → 32 :: Dépilage de TOR
- (TOR) → 150 :: Dépilage de l'index de boucle
- (150)+1 → TOR :: Incrémentation de 1 de l'index de boucle
ou
- (150)+(TOP) → TOR :: Incrémentation de l'index de boucle de la valeur contenue dans TOP. Nota : TOR ne doit pas être dépilé lors de cette opération.
- [(155)] :: On teste l'égalité des contenus aux emplacements NOR et TOR
S'il y a égalité
- (32)+1 → TOR :: Fin de la boucle (on saute l'adresse de branchement)
- (TOR) → 32 :: instruction suivante
sinon
- (32)-1 → TOR :: on restaure l'adresse de l'instruction de "boucle"
- [@(32)]₁₀ → 32 :: appel du sous-programme

En sortie, il faut transférer TOR et NOR dans NOP et TOP pour pouvoir les effacer.

Une instruction de boucle se comporte comme suit : "limite", "index", ">R", ">R", "Loop", "<adresse du call>", "R>", "R>", "DROP", "DROP".

### ANNEXE I

### Instructions exécutables

Dans ce qui suit PC représente le contenu du registre 32.
Le cycle normal est PC + 1 → TOR avec empilage dans (30) voir figure 1. Par défaut toute donnée en sortie de la mémoire 10 est considérée comme une adresse de sous-programme.

### NORMAL (appel de sous-programme) :

Instruction de base
si TOR→PC dépilage de 1 élément dans la mémoire (30)
si NOR→PC dépilage de 2 éléments dans (30)
1. PC + 1 → TOR (empilage)
2. M(PC) analysée comme NORMAL par le décodeur 70.
3. M(PC)→PC

### PRIMITIVE RETOUR :

Instruction élémentaire reconnue par l'unité d'opération avec retour de sous-programme inclus dans l'instruction.
1. PC +1→TOR (empilage)
2. M(PC) analysée comme PRIMITIVE RETOUR
3. NOR→PC (dépilage de 2 éléments)

### PRIMITIVE CONTINUE :

Instruction élémentaire. L'instruction exécutée après est l'instruction suivante en mémoire.
1. PC + 1→TOR (empilage)
2. M(PC) analysée comme PRIMITIVE CONTINUE
3. TOR→PC (dépilage)

### CONSTANTE (la valeur de la constante est juste après) :

1. PC + 1→TOR (empilage)
2. M(PC) analysée comme CONSTANTE, la prochaine instruction sera forcée comme primitive.
3. TOR→PC (dépilage)
4. PC + 1→TOR (empilage)
5. M(PC)↔TOP
6. TOR ou NOR→PC (si CONSTANTE RETOUR ou CONTINUE), (dépilage 1 ou 2).

### TEST :

Plusieurs options sont possibles :
. choix TOR ou NOR (forme RETOUR ou CONTINUE)
. inhiber le + 1 lors de la seconde phase de lecture,
. choix M(PC) ou TOR lors de la seconde phase de lecture.

On va voir quelques options possibles :
1. PC + 1→TOR (empilage)
2. M(PC) analysée comme RETOUR CONDITIONNEL
3. TOR ou NOR→PC selon condition (dépilage 1 ou 2)
ou encore :
1. PC + 1→TOR (empilage)
   2. M(PC) analysée comme IF
   3. TOR→PC (dépilage)
   4. PC + 1→TOR (empilage)
   5. TOR→PC (dépilage) (pas de saut) ou M(PC)→PC (saut) au sous-programme
   ou bien encore ...
   1. PC + 1→TOR (empilage)
   2. M(PC) analysée comme IF
   3. TOR→PC (dépilage)
   4. TOR→PC (retour) ou M(PC)→PC (saut) (sans retour)

### FETCH ou STORE IMMEDIAT :

La donnée est en TOP et l'adresse est dans le code programme.
1. PC + 1→TOR (empilage)
2. M(PC) analysée en FETCH ou STORE IMMEDIAT
3. TOR→PC (dépilage)
4. PC + 1→TOR (empilage)
5. M(PC)→PC
6. M(Pc)↔TOP (suivant fetch ou store)
7. TOR ou NOR→PC (forme retour ou continue de l'instruction), (1 ou 2 dépilages)

### FETCH ou STORE :

Ici l'adresse est en TOP et la donnée (en STORE) est en NOP.
1. PC + 1→TOR (empilage)
2. M(PC) analysée en FETCH ou STORE
3. TOP→PC (dépilage)
4. M(PC)↔TOP (suivant fetch ou store)
5. TOR ou NOR→PC (forme retour ou continue de l'instruction) R> ou >R :

Echange de données entre pile paramètre (20) et pile de retour (30).
R> transfert du sommet de la pile de retour (30) vers le sommet de la pile (20).
>R transfert du sommet de la pile (20) vers le sommet de la pile de retour (30).
1. PC + 1→TOR (empilage)
2. M(PC) analysée en R> ou >R
3. TOR→PC (dépilage)
4. TOR→TOP (suivant >R ou R>)

### ANNEXE II

| **Exécution du programe exemple** | | | | |
|---|---|---|---|---|
| Pas du Prg | Instruction | (32) | [@(32)]₁₀ | Pile de retour |
| 1 | (32)+1→TOR | @APPEL-2 | CONST | [@APPEL-1] |
| 2 | [@(32)]₁₀ | - | | [@APPEL-1] |
| 3 | (TOR)→32 | @APPEL-1 | a | - |
| | | | | |
| 4 | (32)+1→TOR | @APPEL-1 | a | [@APPEL] |
| 5 | [@(32)]₁₀→TOP | | | |
| 6 | (TOR)→32 | @APPEL | @P4 | - |
| | | | | |
| 7 | (32)+1→TOR | @APPEL | @P4 | [@APPEL+1] |
| 8 | [@(32)]₁₀ | | | |
| 9 | [@(32)]₁₀→32 | @P4 | @carré | |
| | | | | |
| 10 | (32)+1→TOR | @P4 | @carré | [@P4+1][@APPEL+1] |
| 11 | [@(32)]₁₀ | @P4 | @carré | |
| 12 | [@(32)]₁₀→32 | @carré | DUP | [@P4+1][@APPEL+1] |
| | | | | |
| 13 | (32)+1→TOR | @carré | DUP | [@carré+1][@P4+1] |
| | | | | [@APPEL+1] |
| 14 | [@(32)]₁₀ | @carré | DUP | |
| 15 | (TOR)→32 | @carré | @* | [@P4+1][@APPEL+1] |
| | | | | |
| 16 | (32)+1→TOR | @carré+1 | @* | [@carré+2][@P4+1] |
| | | | | [@APPEL+1] |
| 17 | [@(32)]₁₀ | @carré+1 | @* | |
| 18 | [@(32)]₁₀→32 | @* | INM1 | [@carré+2][@P4+1] |
| | | | | [@APPEL+1] |

| Exécution de la multiplication par addition et décalage | | | | |
|---|---|---|---|---|
| 19 | (32)+1→TOR | @*F | | [@*F+1][@carré+1] |
| | | | | [@P4+1][@APPEL+1] |
| 20 | [@(32)]₁₀ | | | |
| 21 | (NOR)→32 | @carré+2 | | [@P4+1][@APPEL+1] |
| | | | | |
| 22 | (32)+1→TOR | @carré+2 | IR | [@carré+3][@P4+1] |
| | | | | [@APPEL+1] |
| 23 | [@(32)]₁₀ | | | |
| 24 | (NOR)→32 | @P4+1 | @carré | [@APPEL+1] |
| | | | | |
| 25 | (32)+1→TOR | @P4+1 | @carré | [@P4+1][@APPEL+1] |
| 26 | [@532)]₁₀ | | | |
| 27 | [@(32)]₁₀→32 | @carré | DUP | [@P4+2][@APPEL+1] |

| Comme pas 13 et suivants | | | | |
|---|---|---|---|---|
| 28 | (32)+1→TOP | @carré+2 | ; | [@carré+3][@P4+2] |
| | | | | [@APPEL+1] |
| 29 | [@(32)]₁₀ | | | |
| 30 | (NOR)→32 | @P4+2 | ; | [@APPEL+1] |
| | | | | |
| 31 | (32)+1→TOR | @P4+2 | ; | [@P4+3][@APPEL+1] |
| 32 | [@(32)]₁₀ | | | |
| 33 | (NOR)→32 | @APPEL+1 | | |

## Revendications

1. Dispositif de traitement d'informations plus particulièrement adapté à un langage informatique chaîné du type FORTH notamment, dispositif comportant entre autres :
- une mémoire principale (10) pour contenir un programme d'exécution avec ses données d'instruction constituées par une pluralité d'instructions directement ou non directement exécutables qui sont regroupées en au moins un sous-programme,
- une première mémoire (20) de type pile pour contenir l'adresse suivant l'adresse d'appel à un sous-programme (adresse retour),
- une ou plusieurs unités d'opération (40) pour exécuter les instructions directement exécutables, pouvant contenir :
. une deuxième mémoire de type pile pour contenir des paramètres utilisés par ledit programme,
. un organe de décodage d'instructions (70) pour décoder chaque donnée d'instruction issue de la mémoire principale,
caractérisé en ce qu'il est muni de moyens pour considérer toute donnée d'instruction comme une adresse de sous-programme, par défaut.

2. Dispositif de traitement d'informations selon la revendication 1, caractérisé en ce que lesdits moyens sont constitués par l'organe de décodage (70) formé à partir d'une mémoire associative (100, R1, C1...).

3. Dispositif de traitement d'informations selon la revendication 1 ou 2, caractérisé en ce que pour effectuer des boucles de programme il comporte les moyens suivants :
- un incrémenteur-décrémenteur de registre (34, SW10) pour incrémenter un registre d'index 150),
- un décodeur (155) pour décoder la fin de l'écriture de la boucle, couplé d'une part à une des mémoires piles (30) contenant la limite de boucle et d'autre part au registre d'index (150), et pour agir sur l'organe de décodage (70) d'instruction afin d'assurer la bonne exécution de la boucle.

## Patentansprüche

1. Datenverarbeitungsanordnung, insbesondere ausgelegt für eine Ketten-Programmiersprache vom Typ FORTH, wobei die Anordnung u.a. folgende Elemente enthält:
- einen Hauptspeicher (10) zum Enthalten eines Durchführungsprogramms mit seinen Befehlsdaten, bestehend aus einer Anzahl direkt oder indirekt durchführbarer Befehle, die in wenigstens einem Unterprogram erfaßt sind,
- einen ersten Speicher (20) vom Stapeltyp zum Enthalten der Adresse entsprechend der Anrufadresse für ein Unterprogramm (Rückkehradresse),
- eine oder mehrere Betriebseinheiten (40) zum Durchführen der direkt ausführbaren Befehle, wobei die Einheiten je enthalten können:
. einen zweiten Speicher vom Stapeltyp zum Enthalten der für dieses Programm benutzten Parameter,
. ein Befehlsdecoderelement (70) zum Decodieren jeder vom Hauptspeicher ausgegebenen Befehlsinformation, dadurch gekennzeichnet, daß die Anordnung mit Mitteln versehen ist, die alle Befehlsdaten bei Abwesenheit von Befehlen als Unterprogrammadresse betrachten.

2. Datenverarbeitungsanordnung nach Anspruch 1, dadurch gekennzeichnet, daß die Mittel vom Decoderelement (70) gebildet werden, das ausgehend von einem Assoziativspeicher (100, R1, C1 ...) gebildet wird.

3. Datenverarbeitungsanordnung nach Anspruch 1 oder 2, dadurch gekennzeichnet, daß zum Durchführen von Programmschleifen folgende Mittel vorgesehen sind:
- eine Register-Inkrement/Dekrementeinrichtung (34, SW10) zum Inkrementieren eines Indexregisters (150),
- einen Decoder (155) zum Decodieren des Endes des Schleifenlesevorgangs, einerseits mit einem der Stapelspeicher (30) mit der Schleifenbegrenzung und zum anderen mit dem Indexregister (150) gekoppelt, und zum Einwirken auf das Befehlsdecoderelement (70) zum Gewährleisten der guten Durchführüng der Schleife.

## Claims

1. A data processing device, more particularly adapted to a chained computer language, especially of the FORTH type, which device comprises, *inter alia:*
- a main memory (10) for containing an execution program with its instruction data formed by a plurality of instructions which are directly executable or indirectly executable, arranged in at least one sub-program,
- a first stack-type memory (20) for containing the address following the address calling a sub-program (return address),
- one or several operational units (40) for executing the instructions which can be directly executed, each of which may contain:
. a second stack-type memory for containing parameters used by said program,
. an instruction-decoding member (70) for decoding each instruction data coming from the main memory,
characterized in that it is provided with means for regarding any instruction data as an address of the sub-program, by default.

2. A data processing device as claimed in claim 1, characterized in that said means are constituted by the decoding member (70) formed on the basis of an associative memory (100, R1, C1...).

3. A data processing device as claimed in claim 1 or 2, characterized in that it comprises the following means for carrying out program loops:
- a register incrementer-decrementer (34, SW10) for incrementing an index register (150),
- a decoder (155) for decoding the writing end of the loop, coupled, on the one hand, to one of the stack memories (30) containing the end of the loop and, on the other hand, to the index register (150), and for acting on the instruction decoding member (70) so as to ensure the correct execution of the loop.
